# FASCICULE DE BREVET EUROPEEN

(11) **EP 4 336 070 B1**
(45) Date de publication et mention de la délivrance du brevet: **05.11.2025**
(21) Numéro de dépôt: 23195065.0
(22) Date de dépôt: 04.09.2023
(51) Int. Cl.: F16H 57/04, F02C 7/36, F02C 7/06, F16H 57/08, F16H 1/28

(54) **ENSEMBLE D'ENTRAINEMENT POUR UN REDUCTEUR MECANIQUE DE TURBOMACHINE D'AERONEF**
ANTRIEBSANORDNUNG FÜR EIN MECHANISCHES REDUKTIONSGETRIEBE EINER TURBOMASCHINE EINES FLUGZEUGS
DRIVE ASSEMBLY FOR A MECHANICAL REDUCTION GEAR OF AN AIRCRAFT TURBINE ENGINE

(30) Priorité: 12.09.2022 FR 2209132
(43) Date de publication de la demande: 13.03.2024
(73) Titulaire: Safran Transmission Systems, 92700 Colombes (FR)
(72) Inventeur: PAP, Bálint, 77550 MOISSY-CRAMAYEL (FR); JARROUX, Clément, 77550 MOISSY-CRAMAYEL (FR); MOULY, Guillaume Pierre, 77550 MOISSY-CRAMAYEL (FR); TUNE, Pierre-Damien, 77550 MOISSY-CRAMAYEL (FR)
(74) Mandataire: Gevers & Orès

(56) Documents cités:
- EP-A1- 3 109 452
- WO-A1-2021/063437
- DE-A1- 102019 212 444
- FR-A1- 3 010 449

## Description

### Domaine technique de l'invention

La présente invention concerne le domaine des réducteurs mécaniques pour des turbomachines en particulier d'aéronef, et concerne plus particulièrement un ensemble d'entrainement pour un réducteur mécanique de turbomachine.

### Arrière-plan technique

L'état de l'art comprend notamment les documents FR-B1-3 088 977, FR-B1-3 088 978, FR-B1-3 095 252, FR-B1-3 111 400, EP-A1-3 109 452, FR-A1-3 010 449, DE-A1-10 2019 212444 et WO-A1-2021/063437.

Le rôle d'un réducteur mécanique est de modifier le rapport de vitesse et de couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers hydrodynamiques. Dans ce dernier cas, chaque satellite est monté rotatif sur et autour d'un palier lisse porté par le porte-satellites. Ce palier lisse est alimenté en huile et est configuré pour former un film d'huile entre sa périphérie externe et la périphérie interne du satellite qu'il guide. Pour cela, dans la technique actuelle, chaque satellite comprend une surface cylindrique interne qui s'étend autour d'une surface cylindrique externe du palier lisse et qui délimite avec cette dernière un espace annulaire de formation du film d'huile. Cet espace est alimenté en huile par des orifices d'acheminement d'huile qui sont formés dans le palier lisse et s'étendent depuis la surface cylindrique externe jusqu'à une cavité interne du palier lisse qui est alimentée en huile par le distributeur précité.

Un réducteur mécanique a une masse et un encombrement importants qui sont liés notamment à la masse et à l'encombrement du porte-satellites. Dans la technique actuelle, les satellites sont guidés par des paliers hydrodynamique intérieurs qui sont dimensionnés pour résister aux sollicitations mécaniques et vibratoires en fonctionnement. Plus les paliers sont longs et ont un diamètre important et plus ils sont aptes à supporter de fortes charges. Plus ces dimensions sont importantes et plus les dimensions des satellites sont importantes. Les dimensions et la géométrie des satellites ne sont donc pas forcément pilotées par leurs dentures mais plutôt par les dimensions et la géométrie de leurs paliers. De la même façon, l'encombrement axial des paliers a un impact sur l'encombrement axial du réducteur, et l'encombrement radial des paliers a un impact sur l'encombrement radial du réducteur.

La présente invention propose un perfectionnement simple, efficace et économique pour réduire l'encombrement et la masse des paliers lisses de guidage des satellites et par cette occasion l'encombrement et la masse du réducteur mécanique.

### Résumé de l'invention

L'invention concerne un ensemble d'entrainement pour un réducteur mécanique de turbomachine, en particulier d'aéronef, cet ensemble comportant :
- des satellites répartis autour d'un premier axe et ayant des seconds axes de rotation parallèles entre eux et au premier axe, chacun des satellites comportant au moins une denture externe d'engrènement,
- un porte-satellites qui comprend au moins une paroi transversale qui est perpendiculaire au premier axe,
- des paliers lisses de guidage en rotation des satellites autour de leurs seconds axes, ces paliers lisses étant portés par le porte-satellites, et
- un circuit d'alimentation en huile des paliers lisses, le porte-satellites comprenant des colliers de fixation des satellites à ladite au moins une paroi transversale, chacun de ces colliers s'étendant autour d'un satellite et de son second axe et comportant au moins une portion de surface cylindrique interne, chacun des satellites comprenant au moins une surface cylindrique externe de formation d'un film d'huile avec ladite au moins une portion de surface cylindrique interne, ledit circuit d'alimentation en huile débouchant sur ladite au moins une portion de surface cylindrique interne de chacun des colliers pour la formation dudit film d'huile,
chacun des satellites étant fixé par un collier de fixation médian, qui est situé dans un plan médian perpendiculaire au premier axe et passant par les milieux des satellites.

L'invention propose ainsi de centrer et guider les satellites par l'extérieur et non plus par l'intérieur. La paliers lisses ne sont ainsi pas montés à l'intérieur des satellites mais sont situés à l'extérieur des satellites. Ceci est rendu possible par le fait que le porte-satellites comprend des colliers de fixation des satellites, ces colliers définissant autour des satellites un ou plusieurs espaces de formation d'un film d'huile. On comprend donc que l'intérieur des satellites peut être libre. Les dimensions et géométrie des satellites ne sont donc pas forcément contraintes par celles des paliers. L'encombrement et la masse du réducteur peuvent ainsi être réduits.

La solution proposée est compatible d'un réducteur simple étage ou à plusieurs étages. La solution proposée est compatible d'un réducteur dit épicycloïdal, planétaire ou différentiel. La solution proposée est compatible de dentures droites, hélicoïdales ou en chevron. Enfin, la solution proposée est compatible de tout type de porte-satellites qu'il soit monobloc ou de type cage et porte-cage.

L'ensemble selon l'invention peut comprendre une ou plusieurs les caractéristiques suivantes, prises en combinaison les unes avec les autres selon les revendications:
- la portion de surface cylindrique interne de chacun des colliers s'étend autour du second axe dans le prolongement d'une portion de surface cylindrique interne de ladite au moins une paroi transversale ;
- chacun des satellites est fixé par un, deux ou trois colliers de fixation ;
- chacun des satellites est fixé par deux colliers de fixation latéraux, qui sont situés dans deux plans perpendiculaires au premier axe et passant par des extrémités longitudinales des satellites ;
- le porte-satellites comprend deux parois transversales latérales, qui sont situées respectivement dans lesdits deux plans latéraux perpendiculaires au premier axe et auxquelles sont fixés respectivement les deux colliers de fixation ;
- chacun des satellites comprend respectivement à ses deux extrémités longitudinales deux surfaces cylindriques externes de formation de films d'huile ;
- chacun des satellites est fixé par un collier de fixation médian, qui est situé dans un plan médian perpendiculaire au premier axe et passant par les milieux des satellites ;
- le porte-satellites comprend une paroi transversale médiane qui est située dans ledit premier plan et qui porte ledit collier de fixation médian ;
- chacun des satellites comprend deux dentures externes d'engrènement qui sont séparées l'une de l'autre par une surface cylindrique externe de formation de film d'huile ;
- ladite surface cylindrique externe est située au fond d'une rainure annulaire qui s'étend autour du second axe et qui sépare les deux dentures, cette surface cylindrique externe étant entourée par un collier qui est au moins en partie logé dans cette rainure ;
- les colliers de serrage ont chacun une étendue angulaire autour d'un des seconds axes supérieure ou égale à 180° ;
- le porte-satellites comprend une cage et un porte-cage relié à la cage par des liaisons souples, les colliers de fixation et ladite au moins une paroi transversale faisant partie de la cage ;
- ladite au moins une portion de surface cylindrique interne de chacun des colliers de fixation comprend au moins une rainure de circulation d'huile ;
- la rainure a une forme générale en T et comprend deux branches à savoir une première branche qui s'étend en direction circonférentielle sur ladite au moins une portion de surface cylindrique interne et autour du second axe, et une seconde branche transversale qui s'étend en direction axiale à l'une des extrémités de la première branche et le long de l'axe, l'extrémité de la première branche opposée à la seconde branche est en communication fluidique avec une rainure de ladite et/ou un orifice de ladite au moins une paroi transversale.

La présente invention concerne également un réducteur mécanique pour une turbomachine, en particulier d'aéronef, comportant un ensemble tel que décrit ci-dessus, le réducteur comportant un solaire centré sur le premier axe et engrené avec les satellites, et une couronne centrée sur le premier axe et engrenée avec les satellites.

L'invention concerne en outre une turbomachine, en particulier d'aéronef, comportant au moins un ensemble ou au moins un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique partielle en coupe axiale d'une turbomachine utilisant l'invention,
[Fig. 2] la figure 2 est une vue schématique partielle en coupe axiale d'un réducteur mécanique,
[Fig. 3] la figure 3 est vue schématique partielle en perspective d'un ensemble d'entrainement selon un premier mode de réalisation de l'invention,
[Fig. 4] la figure 4 est une vue schématique de face de l'ensemble de la figure 3,
[Fig. 5] la figure 5 est une autre vue schématique partielle en perspective d'un collier de fixation et d'une paroi transversale d'un porte-satellites de l'assemble de la figure 3,
[Fig. 6] la figure 6 est vue schématique partielle en perspective d'un ensemble selon un deuxième mode de réalisation de l'invention, et
[Fig. 7] la figure 7 est vue schématique partielle en perspective d'un ensemble selon un troisième mode de réalisation de l'invention.

### Description détaillée de l'invention

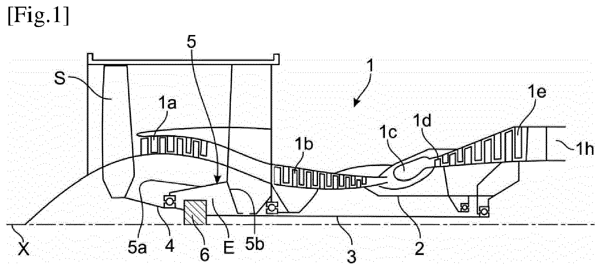

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Le réducteur 6 est positionné dans la partie amont de la turbomachine. Dans la présente demande, les expressions amont et aval font référence à l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

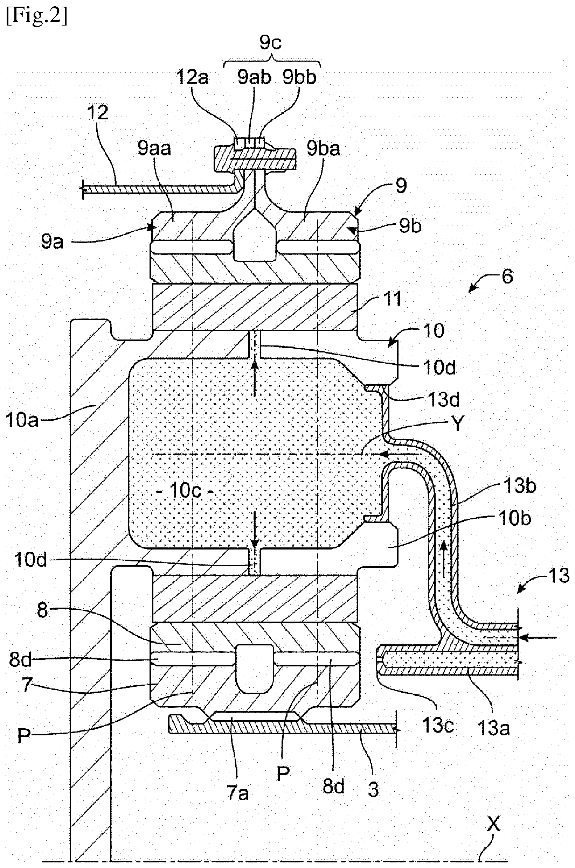

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie, nous avons :
- dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
- dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est prévu sur un des supports tubulaires 10b du porte-satellites 10 et tous les supports sont positionnés les uns par rapport aux autres à l'aide d'une cage 10a du porte-satellites 10. Il existe un nombre de supports tubulaires 10b et de paliers 11 égal au nombre de satellites. Pour des raisons de fonctionnement, de montage, de fabrication, de contrôle, de réparation ou de rechange, les supports 10b et la cage 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes :
- une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
- une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le support 10b dans une ou des cavités 10c pour ensuite ressortir par des canalisations 10d afin de lubrifier les paliers des satellites.

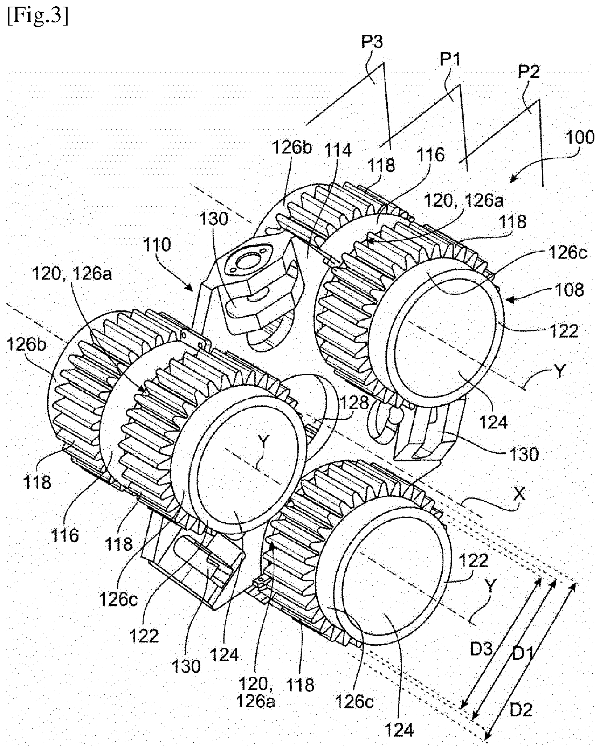

La figure 3 représente un premier mode de réalisation d'un ensemble d'entrainement 100 selon l'invention pour un réducteur mécanique de turbomachine, en particulier d'aéronef.

La description qui précède concernant la turbomachine 1 de la figure 1 et le réducteur 6 de la figure 2 s'applique à la présente invention dans la mesure où elle ne contredit pas ce qui suit.

La description qui suit se focalise donc sur l'ensemble 100 mais il est clair que cet ensemble 100 fait partie d'un réducteur 6 du type de celui de la figure 2, qui comprend donc notamment un solaire 7, une couronne 9, etc.

L'ensemble 100 de la figure 3 comprend pour l'essentiel :
- des satellites 108 répartis autour du premier axe X et ayant des seconds axes de rotation Y parallèles entre eux et au premier axe X, et
- un porte-satellites 110 qui comprend au moins une paroi transversale 114 qui est perpendiculaire au premier axe X, et des colliers 116 de fixation des satellites 108 à cette paroi 114.

Dans l'exemple représenté, le porte-satellites 110 comprend une unique paroi transversale 114 qui est une paroi médiane qui s'étend dans un plan médian P1 perpendiculaire aux axes X, Y et passant par le milieu des satellites 108.

Par ailleurs, dans l'exemple représenté, chaque satellite 108 est fixé à la paroi 114 par un unique collier 116 qui est situé dans le plan médian P1. Le nombre de colliers 116 est donc égal au nombre de satellites 108, qui est de trois dans l'exemple même si ce chiffre n'est pas limitatif.

Chaque satellite 108 comprend au moins une denture externe d'engrènement 118, en particulier avec le solaire et la couronne du réducteur qui ne sont pas représentés.

Dans l'exemple représenté, chaque satellite 108 comprend deux dentures externes d'engrènement 118 qui sont adjacentes et séparées l'une de l'autre par une rainure annulaire 120. Les dentures 118 et la rainure 120 s'étendent autour de l'axe Y du satellite 108. Les dentures 118 sont ici droites même si cet aspect n'est pas non plus limitatif.

Les dentures 118 et la rainure 120 sont formées sur un corps cylindrique 122 du satellite 108 qui a une forme générale tubulaire et est donc creux. Le satellite 108 comprend ainsi une cavité interne 124 qui peut traverser axialement toute la longueur ou dimension axiale du corps 122.

Chaque satellite 108 comprend au moins une surface cylindrique externe 126a, 126b, 126c, qui sont au nombre de trois dans l'exemple représenté.

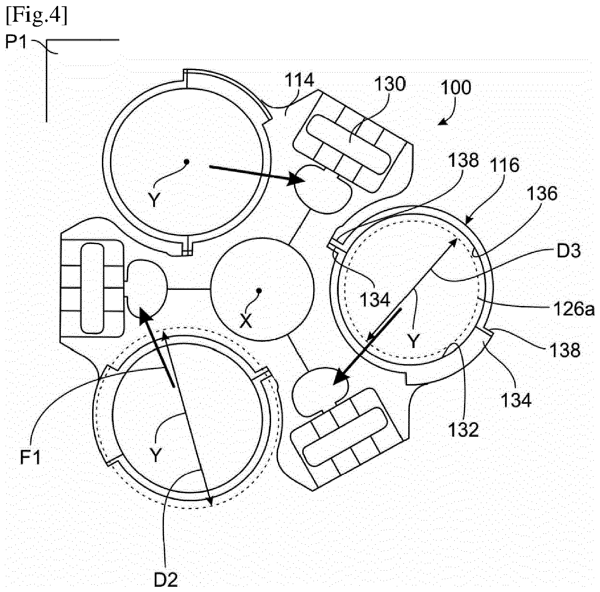

Chaque satellite 108 comprend une surface cylindrique externe 126a médiane qui est ici située au milieu du satellite 108, au fond de la rainure 120 et qui est visible à la figure 4. Cette surface 126a est traversée par le plan P1.

Chaque satellite 108 peut comprendre deux surfaces cylindriques externes 126b, 126c latérales qui sont ici situées aux extrémités longitudinales du satellite 108. Ces surfaces 126b, 126c sont traversées respectivement par deux plans P2, P3 perpendiculaires aux axes X, Y et disposés respectivement de part et d'autre de la paroi 114.

Chacune des dentures 118 est située entre la surface 126a et l'une des surfaces 126b, 126c.

Dans l'exemple représenté, les dentures 118 ont une diamètre externe D1 et un diamètre interne D2. Les surfaces 126a-126c peuvent avoir un même diamètre D3 qui est par exemple inférieur à D1 et inférieur ou égal à D2.

La paroi transversale 114 peut comprendre un orifice central 128 d'allègement ou de passage d'un arbre d'accouplement au solaire du réducteur.

Le porte-satellites 110 peut être du type monobloc ou du type cage et porte-cage. Dans le cas d'un porte-satellites 110 monobloc, le porte-satellites peut former une sortie de couple et être par exemple relié à un arbre rotatif de la turbomachine, ou bien il peut former un stator et être relié à un carter fixe de la turbomachine.

Dans le cas d'un porte-satellites 110 à cage et porte-cage, la paroi 114 et les colliers de fixation 116 peuvent former une cage ou faire partie d'une cage, qui est destinée à être reliée par des liaisons souples à un porte-cage. Ce porte-cage peut lui-même former une sortie de couple et être par exemple relié à un arbre rotatif de la turbomachine, ou bien **il** peut former un stator et être relié à un carter fixe de la turbomachine.

Dans l'exemple représenté d'un porte-satellites 110 du type cage et porte-cage, seule la cage est représentée et est formée par la paroi et les colliers de fixation 116. A sa périphérie externe, la paroi 114 comprend des premiers éléments, tels que des logements 130, configurés pour coopérer par engagement avec des seconds éléments, tels que des doigts du porte-cage (non représenté). Les liaisons souples des doigts dans les logements peuvent être des liaisons à rotules par exemple.

Dans l'exemple représenté, la paroi 114 a une forme générale triangulaire dont les sommets sont tronqués. Les logements 130 sont situés au niveau de ces sommets tronqués et les colliers de fixation 114 sont rapportés sur les côtés du triangle.

Comme illustré dans les dessins, chacun de ces côtés comprend un logement en demi-cercle qui comprend une portion de surface cylindrique interne 132. Cette portion de surface 132 a une étendue angulaire autour de l'axe Y qui est de l'ordre de 180° +/-10%.

A chacune des extrémités circonférentielles de cette portion de surface 132, la paroi comprend une patte ou bride de fixation 134 qui comprend des orifices 135 de passage de vis ou boulons.

Les brides 134 situées aux extrémités d'une même portion de surface 132 s'étendent de préférence dans un même plan. Elles sont donc coplanaires.

Chacun des colliers de fixation 116 s'étend autour d'un axe Y et a une étendue angulaire autour de cet axe qui est par exemple de l'ordre de 180° +/-10%. Cette étendue angulaire est par exemple déterminée pour autoriser et faciliter le montage des satellites 108.

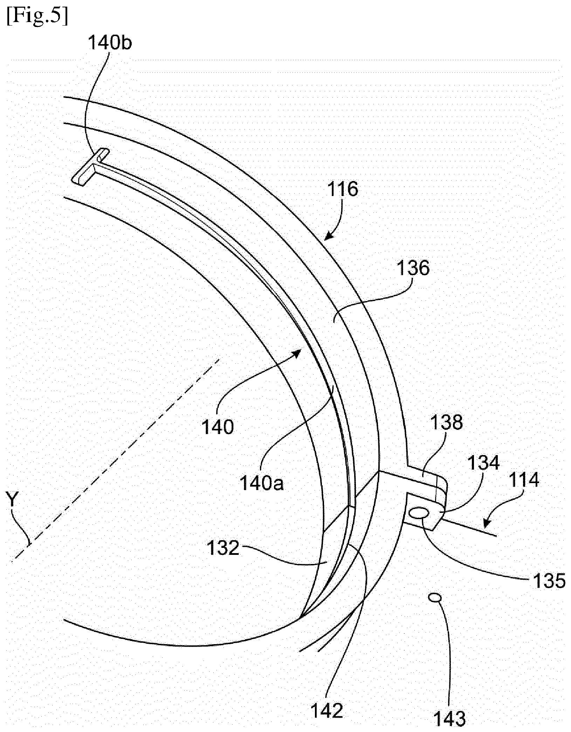

Les colliers 116 sont traversés par le plan P1 et s'étendent respectivement autour des surfaces 126a des satellites 108. Les colliers 116 comprennent chacun une portion de surface cylindrique interne 136 qui s'étend circonférentiellement dans le prolongement de la portion de surface 132 correspondante, comme visible à la figure 5. Les portions de surfaces 136, 132 s'étendent autour de la surface 126a et définissent avec celle-ci un espace annulaire autour de l'axe Y pour la formation d'un film d'huile. Les portions de surface 132, 136 ont donc un diamètre légèrement supérieur à D3.

A chacune de ses extrémités circonférentielles, chaque collier 116 comprend une patte ou bride de fixation 138 qui est destinée à être appliquée contre la patte ou bride de fixation 134 de la paroi 114 et qui comprend des orifices de passage des vis ou boulons précités.

L'orientation des brides 134, 138 peut être différente aux deux extrémités circonférentielles des colliers 116. L'orientation des brides 134, 138 peut également différer entre les satellites 108. Ces paramètres peuvent être adaptés en fonction de la charge appliquée sur les satellites 108 et les colliers 116 en fonctionnement.

Dans l'exemple représenté, les brides 138 de chaque collier 116 s'étendent de préférence dans un même plan.

On désigne par F1 la direction de la charge appliquée sur chacun des satellites 108 en fonctionnement (cf. figure 4). Les brides 138 peuvent être décalées de 5 à 175° par rapport à cette direction, autour de l'axe Y, comme illustré à la figure 4. Dans l'exemple représenté, les brides 138 sont situées respectivement à environ -90° et +90° par rapport à F1.

Le nombre de vis de fixation d'un jeu de brides 134, 138 est par exemple compris entre 1 et 12.

On comprend donc que les satellites 108 sont guidés en rotation autour des axes Y par des paliers lisses qui sont formés par les colliers de fixation 116 montés autour des satellites 108.

L'ensemble 100 comprend en outre un circuit d'alimentation en huile de ces paliers lisses, pour la formation des films d'huile.

Dans l'exemple représenté à la figure 5, la portion de surface 136 de chaque collier 116 comprend au moins une rainure 140 de circulation et de distribution d'huile. Elle a ici une forme générale en T et comprend deux branches 140a, 140b à savoir une première branche 140a qui s'étend en direction circonférentielle sur la portion de surface 136 et autour de l'axe Y, et une seconde branche transversale 140b qui s'étend en direction axiale à l'une des extrémités de la première branche 140a et le long de l'axe Y.

Dans l'exemple représenté, l'extrémité de la première branche 140a opposée à la seconde branche 140b est en communication fluidique avec une rainure 142 de la portion de surface 132 qui peut elle-même être en communication fluidique avec un orifice 143 de la paroi 114 pour le raccordement au circuit précité. Cet orifice 143 est par exemple relié au distributeur 13 de la figure 2.

Chaque collier 116 peut avoir une rainure 140 du type précité, ou bien deux rainures 140 de ce type. Les deux rainures 140 peuvent alors s'étendre circonférentiellement autour de l'axe Y, l'une à la suite de l'autre. Une de ces rainures 140 peut être alimentée en huile via une rainure 142 de la paroi 114, et l'autre de ces rainures pourrait être alimentée en huile via une autre rainure 142 diamétralement opposée de la paroi 114.

En variante, l'alimentation en huile de la rainure 140 ou des rainures 140 de chaque collier 116 pourrait être réalisée par l'extérieur du collier ou au niveau des brides 134, 138.

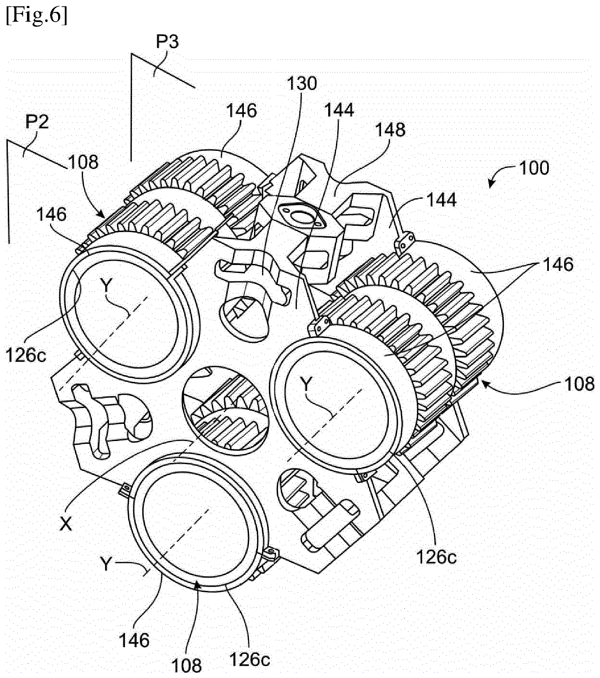

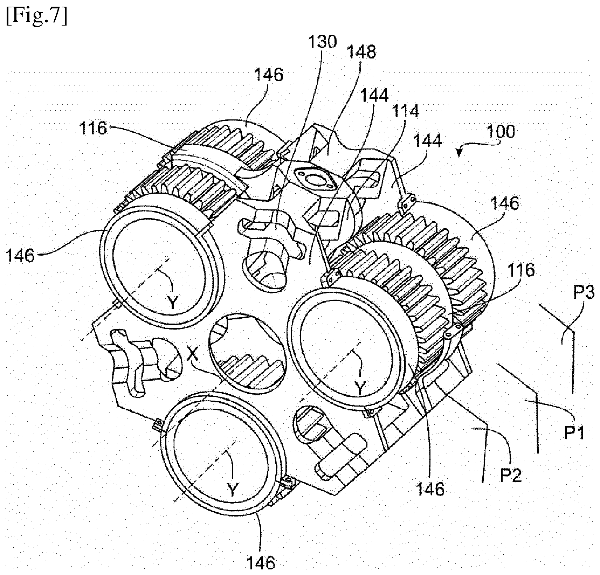

Les variantes de réalisation des figures 6 et 7 diffèrent du précédent mode de réalisation par le nombre de parois transversales et de colliers de fixation du porte-satellites.

Dans la variante de la figure 6, le porte-satellites 110 comprend deux parois transversales 144 qui sont des parois latérales qui s'étendent respectivement dans deux plans latéraux P2, P3 perpendiculaires aux axes X, Y et passant par les extrémités longitudinales des satellites 108.

Chaque satellite 108 est fixé aux parois 144 par deux colliers 146 qui sont situés respectivement dans les plans latéraux P2, P3. Le nombre de colliers 146 est donc égal à deux fois le nombre de satellites 108. Dans l'exemple représenté, il y a trois satellites 108 et donc six colliers 146.

Chaque paroi 144 a une forme générale triangulaire dont les sommets sont tronqués et reliés aux sommets tronqués de l'autre paroi par des pontets 148 qui ont une orientation générale parallèle aux axes X, Y.

Les sommets tronqués et les pontets 148 comportent les logements 130 précités.

Les colliers de fixation 146 sont rapportés et fixés sur les côtés des parois 144. Comme illustré dans les dessins, chacun de ces côtés comprend un logement en demi-cercle qui comprend une portion de surface cylindrique interne 132, comme évoqué dans ce qui précède.

A chacune des extrémités circonférentielles de cette portion de surface 132, la paroi 144 correspondante comprend une patte ou bride de fixation 134 qui comprend des orifices de passage de vis ou boulons.

Les colliers de fixation 146 sont similaires aux colliers 116 décrits dans ce qui précède.

Les colliers 146 sont respectivement traversés par les plans P2, P3 et s'étendent autour des surfaces 126b, 126c des satellites 108, pour former des films d'huile comme évoqué dans ce qui précède.

A chacune des extrémités circonférentielles, chaque collier 146 comprend une patte ou bride de fixation 138 qui est destinée à être appliquée contre la patte ou bride de fixation 134 de la paroi 114 et qui comprend des orifices de passage des vis ou boulons précités.

On comprend donc que les satellites 108 sont guidés en rotation autour des axes Y par des paliers lisses qui sont formés par les colliers de fixation 146 montés autour des satellites 108.

L'ensemble 100 comprend en outre un circuit d'alimentation en huile de ces paliers lisses, du type de celui décrit dans ce qui précède.

Dans la variante de la figure 7, le porte-satellites 110 comprend trois parois transversales 114, 144 qui sont une paroi médiane 114 et deux parois latérales 144. La paroi 114 est située entre les parois 144. Ces parois 114, 144 s'étendent respectivement dans les trois plans P1, P2, P3 précités.

Chaque satellite 108 est fixé aux parois 144 par trois colliers 116, 146 qui sont situés respectivement dans les plans P1, P2, P3. Le nombre de colliers 116, 146 est donc égal à trois fois le nombre de satellites 108. Dans l'exemple représenté, il y a trois satellites 108 et donc neuf colliers 146.

La paroi 114 a une forme générale triangulaire dont les sommets sont tronqués et reliés aux sommets tronqués des autres parois 144 par des pontets 148 qui ont une orientation générale parallèle aux axes X, Y.

Les sommets tronqués et les pontets 148 comportent les logements 130 précités.

Les colliers 116, 146 sont rapportés et fixés sur les côtés des parois 144. Comme illustré dans les dessins, chacun de ces côtés comprend un logement en demi-cercle qui comprend une portion de surface cylindrique interne 132, comme évoqué dans ce qui précède.

A chacune des extrémités circonférentielles de cette portion de surface 132, la paroi correspondante comprend une patte ou bride de fixation 134 qui comprend des orifices de passage de vis ou boulons.

Les colliers de fixation 116, 146 sont similaires aux colliers 116, 146 décrits dans ce qui précède.

Les colliers 116, 146 sont respectivement traversés par les plans P1, P2, P3 et s'étendent autour des surfaces 126a, 126b, 126c des satellites 108, pour former des films d'huile comme évoqué dans ce qui précède.

A chacune des extrémités circonférentielles, chaque collier 116, 146 comprend une patte ou bride de fixation 138 qui est destinée à être appliquée contre la patte ou bride de fixation 134 de la paroi 114, 144 et qui comprend des orifices de passage des vis ou boulons précités.

On comprend donc que les satellites 108 sont guidés en rotation autour des axes Y par des paliers lisses qui sont formés par les colliers de fixation 116, 146 montés autour des satellites 108.

L'ensemble 100 comprend en outre un circuit d'alimentation en huile de ces paliers lisses, du type de celui décrit dans ce qui précède.

L'invention permet de compacter l'ensemble 100 et donc le réducteur 6 destiné à recevoir cet ensemble. En effet, les paliers de cet ensemble peuvent supporter des charges plus importantes à un diamètre plus important. Le fait de mettre les paliers à l'extérieur des satellites 108 permet ainsi de :
- diminuer le diamètre de la denture 118 du satellite 108, et donc l'encombrement radial du réducteur 6, et/ou
- diminuer la longueur du palier et donc la longueur du réducteur.

## Revendications

1. Ensemble (100) d'entrainement pour un réducteur mécanique (6) de turbomachine (1), en particulier d'aéronef, cet ensemble (100) comportant :
- des satellites (108) répartis autour d'un premier axe (X) et ayant des seconds axes de rotation (Y) parallèles entre eux et au premier axe (X), chacun des satellites (108) comportant au moins une denture externe d'engrènement (118),
- un porte-satellites (110) qui comprend au moins une paroi transversale (114, 144) qui est perpendiculaire au premier axe (X),
- des paliers lisses de guidage en rotation des satellites (108) autour de leurs seconds axes (Y), ces paliers lisses étant portés par le porte-satellites (110),
et
- un circuit d'alimentation en huile des paliers lisses,
le porte-satellites (110) comprenant des colliers (116, 146) de fixation des satellites (108) à ladite au moins une paroi transversale (114, 144), chacun de ces colliers (116, 146) s'étendant autour d'un satellite (108) et de son second axe (Y) et comportant au moins une portion de surface cylindrique interne (132),
chacun des satellites (108) comprenant au moins une surface cylindrique externe (126a, 126b, 126c) de formation d'un film d'huile avec ladite au moins une portion de surface cylindrique interne (132),
ledit circuit d'alimentation en huile débouchant sur ladite au moins une portion de surface cylindrique interne (132) de chacun des colliers (116, 146) pour la formation dudit film d'huile,
**caractérisé en ce que** chacun des satellites (108) est fixé par un desdits colliers de fixation (116), qui est un collier de fixation médian (116), situé dans un plan médian (P1) perpendiculaire au premier axe (X) et passant par les milieux des satellites (108).

2. Ensemble (100) selon la revendication 1, dans lequel la portion de surface cylindrique interne (132) de chacun des colliers (116, 146) s'étend autour du second axe (Y) dans le prolongement d'une portion de surface cylindrique interne (136) de ladite au moins une paroi transversale (114, 144).

3. Ensemble (100) selon la revendication 1 ou 2, dans lequel chacun des satellites (108) est fixé par un ou trois colliers de fixation (116, 146).

4. Ensemble (100) selon l'une des revendications 1 à 3, dans lequel chacun des satellites (108) est en outre fixé par deux colliers de fixation latéraux (146), qui sont situés dans deux plans (P2, P3) perpendiculaires au premier axe (X) et passant par des extrémités longitudinales des satellites (108).

5. Ensemble (100) selon la revendication 4, dans lequel le porte-satellites (108) comprend deux parois transversales latérales (144), qui sont situées respectivement dans lesdits deux plans latéraux (P2, P3) perpendiculaires au premier axe (X) et auxquelles sont fixés respectivement les deux colliers de fixation (116, 146).

6. Ensemble (100) selon la revendication 4 ou 5, dans lequel chacun des satellites (108) comprend respectivement à ses deux extrémités longitudinales deux surfaces cylindriques externes (126b, 126c) de formation de films d'huile.

7. Ensemble (100) selon l'une des revendications précédentes, dans lequel le porte-satellites (110) comprend une paroi transversale médiane (114) qui est située dans ledit premier plan (P1) et qui porte ledit collier de fixation médian (116).

8. Ensemble (100) selon l'une des revendications précédentes, dans lequel chacun des satellites (108) comprend deux dentures externes d'engrènement (118) qui sont séparées l'une de l'autre par une surface cylindrique externe (126a) de formation de film d'huile.

9. Ensemble (100) selon la revendication 8, dans lequel ladite surface cylindrique externe (126a) est située au fond d'une rainure annulaire (120) qui s'étend autour du second axe (Y) et qui sépare les deux dentures (118), cette surface cylindrique externe (126a) étant entourée par un collier (116) qui est au moins en partie logé dans cette rainure (120).

10. Ensemble (100) selon l'une des revendications précédentes, dans lequel les colliers de serrage (116, 146) ont chacun une étendue angulaire autour d'un des seconds axes (Y) supérieure ou égale à 180°.

11. Ensemble (100) selon l'une des revendications précédentes, dans lequel le porte-satellites (110) comprend une cage et un porte-cage relié à la cage par des liaisons souples, les colliers de fixation (116, 146) et ladite au moins une paroi transversale (114, 144) faisant partie de la cage.

12. Ensemble (100) selon l'une des revendications précédentes, dans lequel ladite au moins une portion de surface cylindrique interne (132) de chacun des colliers de fixation (116, 146) comprend au moins une rainure (140) de circulation d'huile.

13. Ensemble (100) selon la revendication 12, dans lequel la rainure (140) a une forme générale en T et comprend deux branches à savoir une première branche (140a) qui s'étend en direction circonférentielle sur ladite au moins une portion de surface cylindrique interne (132) et autour du second axe (Y), et une seconde branche transversale (140b) qui s'étend en direction axiale à l'une des extrémités de la première branche (140a) et le long de l'axe (Y), l'extrémité de la première branche (140a) opposée à la seconde branche (140b) étant de préférence en communication fluidique avec une rainure (142) de ladite au moins une paroi transversale (114, 144) et/ou en communication fluidique avec un orifice de ladite au moins une paroi transversale (114, 144).

14. Réducteur mécanique (6) pour une turbomachine (1), en particulier d'aéronef, comportant un ensemble (100) selon l'une des revendications précédentes, le réducteur comportant un solaire (7) centré sur le premier axe (X) et engrené avec les satellites (108), et une couronne (109) centrée sur le premier axe (X) et engrenée avec les satellites (108).

15. Turbomachine (1), en particulier d'aéronef, comportant au moins un ensemble (100) selon l'une des revendications 1 à 13 ou au moins un réducteur mécanique (6) selon la revendication 14.

## Patentansprüche

1. Baugruppe (100) zum Antreiben eines mechanischen Untersetzungsgetriebes (6) eines Turbotriebwerks (1), insbesondere eines Luftfahrzeugs, wobei diese Baugruppe (100) umfasst:
- Satelliten (108), um eine erste Achse (X) herum verteilt und untereinander und zu der ersten Achse (X) parallele zweite Drehachsen (Y) aufweisend, wobei jeder der Satelliten (108) mindestens eine externe Eingriffsverzahnung (118) umfasst,
- einen Satellitenträger (110) der mindestens eine querverlaufende Wand (114, 144) umfasst, die zu der ersten Achse (X) senkrecht ist,
- Gleitlager zur Rotationsführung der Satelliten (108) um deren zweite Achsen (Y) herum, wobei diese Gleitlager von dem Satellitenträger (110) getragen werden, und
- einen Kreislauf zur Ölversorgung der Gleitlager,
wobei der Satellitenträger (110) Kragen (116, 146) zur Befestigung der Satelliten (108) an die mindestens eine querverlaufende Wand (114, 144) umfasst, wobei sich jeder dieser Kragen (116, 146) um einen Satelliten (108) und seine zweite Achse (Y) herum erstreckt und mindestens einen internen zylindrischen Oberflächenabschnitt (132) umfasst,
wobei jeder der Satelliten (108) mindestens eine externe zylindrische Oberfläche (126a, 126b, 126c) zur Bildung eines Ölfilms mit dem mindestens einen internen zylindrischen Oberflächenabschnitt (132) umfasst,
wobei der Kreislauf zur Ölversorgung auf dem mindestens einen internen zylindrischen Oberflächenabschnitt (132) von jedem der Kragen (116, 146) zur Bildung des Ölfilms mündet, **dadurch gekennzeichnet, dass** jeder der Satelliten (108) durch einen der Befestigungskragen (116) befestigt ist, der ein mittlerer Befestigungskragen (116) ist, der sich in einer mittleren Ebene (P1) befindet, die senkrecht zu der ersten Achse (X) ist und die Mittelpunkte der Satelliten (108) durchquert.

2. Baugruppe (100) nach Anspruch 1, wobei der interne zylindrische Oberflächenabschnitt (132) von jedem der Kragen (116, 146) sich in der Verlängerung eines internen zylindrischen Oberflächenabschnitts (136) der mindestens einen querverlaufenden Wand (114, 144) um die zweite Achse (Y) herum erstreckt.

3. Baugruppe (100) nach Anspruch 1 oder 2, wobei jeder der Satelliten (108) durch einen oder drei Befestigungskragen (116, 146) befestigt ist.

4. Baugruppe (100) nach einem der Ansprüche 1 bis 3, wobei jeder der Satelliten (108) des Weiteren durch zwei seitliche Befestigungskragen (146) befestigt ist, die sich in zwei zu der ersten Achse (X) senkrechten Ebenen (P2, P3) befinden und die Längsenden der Satelliten (108) durchqueren.

5. Baugruppe (100) nach Anspruch 4, wobei der Satellitenträger (108) zwei seitliche querverlaufende Wände (144) umfasst, die sich jeweils in den zwei zur ersten Achse (X) senkrechten seitlichen Ebenen (P2, P3) befinden und an denen jeweils die zwei Befestigungskragen (116, 146) befestigt sind.

6. Baugruppe (100) nach Anspruch 4 oder 5, wobei jeder der Satelliten (108) an seinen zwei Längsenden jeweils zwei externe zylindrische Oberflächen (126b, 126c) zur Bildung von Ölfilmen umfasst.

7. Baugruppe (100) nach einem der vorstehenden Ansprüche, wobei der Satellitenträger (110) eine mittlere querverlaufende Wand (114) umfasst, die sich in der ersten Ebene (P1) befindet und die den mittleren Befestigungskragen (116) trägt.

8. Baugruppe (100) nach einem der vorstehenden Ansprüche, wobei jeder der Satelliten (108) zwei externe Eingriffsverzahnungen (118) umfasst, die voneinander durch eine externe zylindrische Oberfläche (126a) zur Bildung eines Ölfilms getrennt sind.

9. Baugruppe (100) nach Anspruch 8, wobei sich die externe zylindrische Oberfläche (126a) am Boden einer ringförmigen Aussparung (120) befindet, die sich um die zweite Achse (Y) herum erstreckt und die die zwei Verzahnungen (118) trennt, wobei diese externe zylindrische Oberfläche (126a) von einem Kragen (116) umgeben wird, der mindestens zum Teil in dieser Aussparung (120) untergebracht ist.

10. Baugruppe (100) nach einem der vorstehenden Ansprüche, wobei die Einspannkragen (116, 146) jeweils eine Winkelausdehnung um eine der zweiten Achsen (Y) herum von größer als oder gleich 180° aufweisen.

11. Baugruppe (100) nach einem der vorstehenden Ansprüche, wobei der Satellitenträger (110) einen Käfig und einen durch flexible Verbindungen mit dem Käfig verbundenen Käfigträger umfasst, wobei die Befestigungskragen (116, 146) und die mindestens eine querverlaufende Wand (114, 144) einen Teil des Käfigs ausmachen.

12. Baugruppe (100) nach einem der vorstehenden Ansprüche, wobei der mindestens eine interne zylindrische Oberflächenabschnitt (132) von jedem der Befestigungskragen (116, 146) mindestens eine Aussparung (140) zur Zirkulation von Öl umfasst.

13. Baugruppe (100) nach Anspruch 12, wobei die Aussparung (140) eine allgemeine T-Form aufweist und zwei Zweige, nämlich einen ersten Zweig (140a), der sich in Umfangsrichtung auf dem mindestens einen internen zylindrischen Oberflächenabschnitt (132) und um die zweite Achse (Y) herum erstreckt, und einen zweiten querverlaufenden Zweig (140b) umfasst, der sich in axialer Richtung zu einem der Enden des ersten Zweigs (140a) und entlang der Achse (Y) erstreckt, wobei das dem zweiten Zweig (140b) gegenüberliegende Ende des ersten Zweigs (140a) vorzugsweise in strömungstechnischer Kommunikation mit einer Aussparung (142) der mindestens einen querverlaufenden Wand (114, 144) und/oder in strömungstechnischer Kommunikation mit einer Öffnung der mindestens einen querverlaufenden Wand (114, 144) vorliegt.

14. Mechanisches Untersetzungsgetriebe (6) für ein Turbotriebwerk (1), insbesondere eines Luftfahrzeugs, das eine Baugruppe (100) nach einem der vorstehenden Ansprüche umfasst, wobei das Untersetzungsgetriebe ein auf der ersten Achse (X) zentriertes und mit den Satelliten (108) in Eingriff vorliegendes Sonnenrad (7) und eine auf der ersten Achse (X) zentrierte und mit den Satelliten (108) in Eingriff vorliegende Krone (109) umfasst.

15. Turbotriebwerk (1), insbesondere eines Luftfahrzeugs, das mindestens eine Baugruppe (100) nach einem der Ansprüche 1 bis 13 oder mindestens ein mechanisches Untersetzungsgetriebe (6) nach Anspruch 14 umfasst.

## Claims

1. A drive assembly (100) for a mechanical reducer (6) for a turbomachine (1), in particular for an aircraft, this assembly (100) comprising:
- planet gears (108) distributed around a first axis (X) and having second axes of rotation (Y) parallel to each other and to the first axis (X), each of the planet gears (108) comprising at least one external meshing toothing (118),
- a planet carrier (110) comprising at least one transverse wall (114, 144) perpendicular to the first axis (X),
- plain bearings for guiding the planet gears (108) in rotation about their second axes (Y), these plain bearings being carried by the planet carrier (110), and
- an oil supply circuit for the plain bearings,
the planet carrier (110) comprising collars (116, 146) for attaching the planet gears (108) to said at least one transverse wall (114, 144), each of these collars (116, 146) extending around a planet gear (108) and its second axis (Y) and comprising at least one internal cylindrical surface portion (132),
each of the planet gears (108) comprising at least one external cylindrical surface (126a, 126b, 126c) for forming an oil film with said at least one internal cylindrical surface portion (132),
said oil supply circuit opening onto said at least one internal cylindrical surface portion (132) of each of the collars (116, 146) for the formation of said oil film,
**characterised in that** each of the planet gears (108) is attached by one of said attachment collars (116), which is a median attachment collar (116), located in a median plane (P1) perpendicular to the first axis (X) and passing through the middles of the planet gears (108).

2. The assembly (100) according to claim 1, wherein the internal cylindrical surface portion (132) of each of the collars (116, 146) extends around the second axis (Y) in the extension of an internal cylindrical surface portion (136) of said at least one transverse wall (114, 144).

3. The assembly (100) according to claim 1 or 2, wherein each of the planet gears (108) is attached by one or three attachment collars (116, 146).

4. The assembly (100) according to one of claims 1 to 3, wherein each of the planet gears (108) is additionally attached by two lateral attachment collars (146), which are located in two planes (P2, P3) perpendicular to the first axis (X) and passing through longitudinal ends of the planet gears (108).

5. The assembly (100) according to claim 4, wherein the planet carrier (108) comprises two lateral transverse walls (144), which are located respectively in said two lateral planes (P2, P3) perpendicular to the first axis (X) and to which the two attachment collars (116, 146) are attached respectively.

6. The assembly (100) according to claim 4 or 5, wherein each of the planet gears (108) comprises two external cylindrical oil film-forming surfaces (126b, 126c) at its two longitudinal ends respectively.

7. The assembly (100) according to one of the preceding claims, wherein the planet carrier (110) comprises a median transverse wall (114) which is situated in said first plane (P1) and which carries said median attachment collar (116).

8. The assembly (100) according to any of the preceding claims, wherein each of the planet gears (108) comprises two external meshing toothings (118) which are separated from each other by an external cylindrical oil film-forming surface (126a).

9. The assembly (100) according to claim 8, wherein said external cylindrical surface (126a) is located at the bottom of an annular groove (120) which extends around the second axis (Y) and which separates the two toothings (118), this external cylindrical surface (126a) being surrounded by a collar (116) which is at least partly housed in this groove (120).

10. The assembly (100) according to one of the preceding claims, wherein the clamping collars (116, 146) each have an angular extent about one of the second axes (Y) greater than or equal to 180°.

11. The assembly (100) according to one of the preceding claims, wherein the planet carrier (110) comprises a cage and a cage carrier connected to the cage by flexible connections, the attachment collars (116, 146) and said at least one transverse wall (114, 144) forming part of the cage.

12. The assembly (100) according to one of the preceding claims, wherein said at least one internal cylindrical surface portion (132) of each of the attachment collars (116, 146) comprises at least one oil circulation groove (140).

13. The assembly (100) according to claim 12, wherein the groove (140) has a generally T-shaped form and comprises two branches, namely a first branch (140a) which extends in the circumferential direction over said at least one internal cylindrical surface portion (132) and around the second axis (Y), and a second transverse branch (140b) which extends in the axial direction at one of the ends of the first branch (140a) and along the axis (Y), the end of the first branch (140a) opposite the second branch (140b) being preferably in fluidic communication with a groove (142) of said at least one transverse wall (114, 144) and/or in fluidic communication with an orifice of said at least one transverse wall (114, 144).

14. A mechanical reducer (6) for a turbomachine (1), in particular for an aircraft, comprising an assembly (100) according to one of the preceding claims, the reducer comprising a sun gear (7) centred on the first axis (X) and meshed with the planet gears (108), and a ring gear (109) centred on the first axis (X) and meshed with the planet gears (108).

15. A turbomachine (1), in particular for an aircraft, comprising at least one assembly (100) according to one of claims 1 to 13 or at least one mechanical reducer (6) according to claim 14.
